(19) Europäisches Patentamt / European Patent Office / Office européen des brevets

(11) **EP 4 123 752 A1**

(12) **EUROPEAN PATENT APPLICATION**
published in accordance with Art. 153(4) EPC

(43) Date of publication:
**25.01.2023 Bulletin 2023/04**

(21) Application number: **20925244.4**

(22) Date of filing: **18.03.2020**

(51) International Patent Classification (IPC):
***H01M 4/131*** (2010.01)

(52) Cooperative Patent Classification (CPC):
**H01M 4/131; Y02E 60/10**

(86) International application number:
**PCT/CN2020/079955**

(87) International publication number:
**WO 2021/184247 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventor: **WANG, Kai Ningde, Fujian 352100 (CN)**

(74) Representative: **Klunker IP Patentanwälte PartG mbB Destouchesstraße 68 80796 München (DE)**

(54) **POSITIVE ELECTRODE ACTIVE MATERIAL AND ELECTROCHEMICAL DEVICE CONTAINING SAME**

(57) This application provides a positive active material and an electrochemical device containing same. A first peak and a second peak exist in a $^{59}$Co NMR spectrum of the positive active material. A center position of the first peak is at A ppm, a center position of the second peak is at B ppm, and $13900 \leq A < B \leq 14300$. The electrochemical device that employs the positive active material can exhibit excellent cycle stability and rate performance at a high voltage.

FIG. 1B

EP 4 123 752 A1

**Description**

**TECHNICAL FIELD**

This application relates to the technical field of energy storage, and in particular, to a positive active material and an electrochemical device that applies the positive active material.

**BACKGROUND**

With the popularization and application of smart products, people's demand for electronic products such as a mobile phone, a notebook computer, and a camera is increasing every year. An electrochemical device serving as a power supply of the electronic products is increasingly important in our daily lives. By virtue of advantages such as a high specific energy, a high working voltage, a low self-discharge rate, a small size, and a light weight, lithium-ion batteries are widely applied in the field of consumer electronics.

However, with the wide application of the electrochemical devices in electric vehicles, mobile electronic devices, and unmanned aerial vehicles, people have imposed higher requirements on the electrochemical devices. Using electric vehicles as an example, people require the electric vehicles to have a long cruising range and be chargeable and dischargeable at a high power. This requires an energy device of electric vehicles to possess a high energy density and a high power density. To meet the requirement of a high energy density, an electrochemical device needs to be able to work stably under a high voltage window. To meet the requirement of a high power density, the electrochemical device needs to be fast chargeable and dischargeable under a high current (that is, possess excellent rate performance). These in turn impose higher requirements on a positive and negative active materials and an electrolytic solution of the electrochemical device.

**SUMMARY**

This application provides a positive active material, a method for preparing the positive active material, and an electrochemical device that applies the positive active material in an attempt to solve at least one problem in the related art to at least some extent.

In an aspect of this application, this application provides a positive active material. A first peak and a second peak exist in a $^{59}$Co NMR spectrum of the positive active material. A center position of the first peak is at A ppm, a center position of the second peak is at B ppm, and $13900 \leq A < B \leq 14300$.

In some embodiments of this application, a peak width at half height of the first peak is HA, a peak width at half height of the second peak is HB, and $0.017 \leq HB/HA \leq 90.2$.

In some embodiments of this application, a peak area of the first peak is SA, a peak area of the second peak is SB, and $0 < SA/SB \leq 0.3$.

In some embodiments of this application, the positive active material includes a compound represented by Formula I:

$$Li_aCo^I_{b1}Co^{II}_{b2}M_cO_dE_e \qquad \text{(Formula I)},$$

where $0.95 \leq a \leq 1.05$, $0 < b1 < b2 < 1$, $b1 + b2 \leq 1$, $0 \leq c \leq 0.2$, $0 < d \leq 2$, $0 \leq e \leq 0.1$; M is one or more elements selected from the group consisting of Al, Mg, Ca, Zn, Ti, Zr, Nb, Mo, La, Y, Ce, Ni, Mn, W and Ho; and E is one or more elements selected from the group consisting of F, S, B, N and P.

According to another aspect of this application, this application provides an electrochemical device, including a positive electrode, a negative electrode, and an electrolytic solution. The positive electrode includes a positive current collector and a positive active material layer. The positive active material layer includes the positive active material according to this application.

In some embodiments of this application, the positive active material includes particles with a diameter not less than 5 $\mu$m. When a discharge capacity of the electrochemical device fades to 80% to 90% of an initial discharge capacity, a crack rate of the particles with a diameter not less than 5 $\mu$m is not greater than 25%.

In some embodiments of this application, when a discharge capacity of the electrochemical device fades to 80% or higher of an initial discharge capacity, a growth rate of a direct current resistance of the electrochemical device per cycle is less than 1.5%.

In some embodiments of this application, a surface of the particles of the positive active material includes a by-product layer. When a discharge capacity of the electrochemical device fades to 80% to 90% of an initial discharge capacity, a thickness of the by-product layer is $\eta$ $\mu$m, and $\eta \leq 0.5$.

In some embodiments of this application, the by-product layer includes carbon, oxygen, fluorine, and nitrogen;

based on a total weight of carbon, oxygen, fluorine, and nitrogen, an average weight percentage of fluorine is $\omega F$, an average weight percentage of nitrogen is $\omega N$, and $\omega F - \omega N \geq 5\%$.

In some embodiments of this application, the electrolytic solution includes a nitrile-containing additive. The nitrile-containing additive includes at least one selected from the group consisting of: adiponitrile, succinonitrile, 1,3,5-pentane tricarbonitrile, 1,3,6-hexane tricarbonitrile, 1,2,6-hexane tricarbonitrile and triacetonitrile ammonia.

According to some embodiments of this application, based on a total weight of the electrolytic solution, a content of the nitrile-containing additive is 0.1% to 10%.

According to another aspect of this application, this application provides an electronic device, including the electrochemical device according to this application.

This application discloses a positive active material with a $^{59}Co$ NMR doublet for use in an electrochemical device. The positive active material maintains structural stability during high-voltage charge and discharge. Therefore, the electrochemical device that applies the positive active material exhibits excellent cycle performance and rate performance under a high voltage.

Additional aspects and advantages of this application will be partly described or illustrated later herein or expounded through implementation of the embodiments of this application.

**BRIEF DESCRIPTION OF DRAWINGS**

For ease of describing the embodiments of this application, the following outlines the drawings needed for describing the embodiments of this application or the prior art. Evidently, the drawings outlined below are merely a part of embodiments in this application. Without making any creative efforts, a person skilled in the art can still derive the drawings of other embodiments according to the structures illustrated in these drawings.

FIG. 1A shows a full-spectrum nuclear magnetic resonance pattern of cobalt in a positive active material according to Embodiment 1; FIG. 1B shows a close-up peak splitting view of a highest peak shown in FIG. 1A;

FIG. 2 is a line graph of a discharge capacity retention rate of lithium-ion batteries subjected to 250 cycles according to Embodiment 1 and Comparative Embodiment 1;

FIG. 3 is a line graph of a discharge capacity retention rate of lithium-ion batteries under different currents according to Embodiment 1 and Comparative Embodiment 1; and

FIG. 4 is a scatterplot of a DCR average growth rate per cycle of a lithium-ion battery prepared in Embodiment 1 versus Comparative Embodiment 1.

**DETAILED DESCRIPTION OF EMBODIMENTS**

Embodiments of this application will be described in detail below. Throughout the specification of this application, the same or similar components and the components having the same or similar functions are denoted by similar reference numerals. The embodiments described herein with reference to the drawings are illustrative and graphical in nature, and are intended to enable a basic understanding of this application. The embodiments of this application are not to be construed as a limitation on this application.

The terms "roughly," "substantially," "substantively", and "approximately" used herein are intended to describe and represent small variations. When used with reference to an event or situation, the terms may denote an example in which the event or situation occurs exactly or an example in which the event or situation occurs very approximately. For example, when used together with a numerical value, such a term may represent a variation range falling within $\pm 10\%$ of the numerical value, such as $\pm 5\%$, $\pm 4\%$, $\pm 3\%$, $\pm 2\%$, $\pm 1\%$, $\pm 0.5\%$, $\pm 0.1\%$, or $\pm 0.05\%$ of the numerical value. For example, if a difference between two numerical values falls within $\pm 10\%$ of an average of the numerical values (such as $\pm 5\%$, $\pm 4\%$, $\pm 3\%$, $\pm 2\%$, $\pm 1\%$, $\pm 0.5\%$, $\pm 0.1\%$, or $\pm 0.05\%$ of the average), the two numerical values may be considered "substantially" the same.

In addition, a quantity, a ratio, or another numerical value herein is sometimes expressed in the format of a range. Understandably, the format of a range is for convenience and brevity, and needs to be flexibly understood to include not only the numerical values explicitly specified and defined in the range, but also all individual numerical values or sub-ranges covered in the range as if each individual numerical value and each sub-range were explicitly specified.

In the description of specific embodiments and claims, a list of items referred to by using the terms such as "one or more of", "one or more thereof", "one or more types of" or other similar terms may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

## I. Positive Active Material

Numerous positive active materials have been put forward currently for use in a lithium-ion battery. Among the numerous positive active materials, lithium cobalt oxide ($LiCoO_2$) has become a mainstream battery material in the field of electronic products by virtue of a high discharge voltage plateau and a high volumetric energy density. A discharge gram specific capacity of lithium cobalt oxide increases with the increase of the working voltage. Generally, a discharge gram specific capacity of the lithium cobalt oxide increases by approximately 10% for each increment of 0.1 V of the working voltage. In pursuit of a high energy density, a charge cut-off voltage of the battery that employs the lithium cobalt oxide keeps increasing from 4.2 V and 4.3 V to present-day's 4.4 V However, when a lithium-ion battery is charged until a voltage of 4.4 V or above, the structure of the lithium cobalt oxide undergoes irreversible phase transition and structural collapse, resulting in disruption of a layered structure of the lithium cobalt oxide.

Specifically, lithium cobalt oxide is a layered oxide material with two-dimensional lithium ion deintercalation channels. On the one hand, during deintercalation of lithium ions, lithium vacancies are continuously formed, resulting in shrinkage of interlayer spacing of the lithium cobalt oxide. With the continuous increase of the amount of delithiation, the layered structure of the lithium cobalt oxide will even collapse. On the other hand, when the lithium-ion battery is charged until a voltage of 4.4 V or above, more lithium ions will be deintercalated, thereby enhance oxidizability of the lithium cobalt oxide and aggravate side reactions between the lithium cobalt oxide and the electrolytic solution. This results in cobalt dissolution in the lithium cobalt oxide, disrupts the surface of lithium cobalt oxide particles, and produces gas, and in turn, deteriorates the electrochemical performance of the electrochemical device, especially cycle performance and rate performance.

Based on at least the foregoing insight of the inventor of this application with respect to the prior art, the inventor of this application is committed to obtaining a positive active material that maintains structural stability in a high-voltage (4.4 V or above) environment, so as to improve the cycle performance and rate performance of the electrochemical device at a high voltage.

In some embodiments, the positive active material according to this application includes a composite oxide containing at least metallic cobalt and lithium (hereinafter referred to as lithium cobalt oxide). Specifically, this application introduces a reasonable distribution of vacancies in the lithium cobalt oxide so that at least two different chemical environments of cobalt exist inside the lithium cobalt oxide. In one of the chemical environments, vacancies exist around cobalt ions, and in the other chemical environment, no vacancies exist around cobalt ions. In contrast to the cobalt without surrounding vacancies, a peak formed by the cobalt with surrounding vacancies in a nuclear magnetic resonance spectrum of cobalt ($^{59}$Co NMR spectrum for short) is shifted. Therefore, at least two peaks exist in the $^{59}$Co NMR spectrum of the positive active material. Each peak represents the cobalt in a different chemical environment.

In some embodiments, a first peak and a second peak exist in a $^{59}$Co NMR spectrum of the positive active material. A center position of the first peak is at A ppm, a center position of the second peak is at B ppm, and $13900 \leq A < B \leq 14300$. As found in this application, compared with the cobalt without surrounding vacancies, the cobalt with surrounding vacancies is more structurally stable, and is not prone to dissolve out or induce side reactions with the electrolytic solution during charge and discharge at a high voltage. Meanwhile, the existence of the vacancies can effectively reduce strain caused by the volume expansion and shrinkage of the positive active material during charge and discharge. Therefore, the electrochemical device that applies the positive active material can exhibit excellent cycle stability and rate performance during charge and discharge at a high voltage.

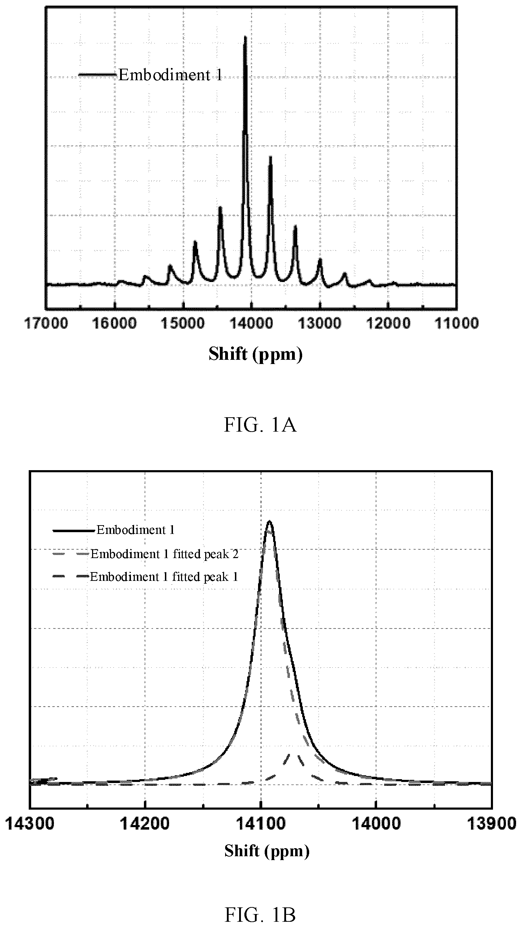

FIG. 1A shows a full-spectrum pattern of cobalt in a positive active material according to Embodiment 1; and FIG. 1B shows a close-up peak splitting view of a highest peak shown in FIG. 1A. As shown in FIG. 1B, asymmetry is evident between the left and right of the highest peak of cobalt in the positive active material in Embodiment 1. For example, the right curvature is gentler than the left curvature near the bottom of FIG. 1B. The peak of the positive active material in Embodiment 1 is split by using Dmfit software, so as to obtain two fitted peaks: a fitted peak 1 (a first peak) and a fitted peak 2 (a second peak). The center position of the fitted peak 1 is at approximately 14070 ppm, and the center position of the fitted peak 2 is at approximately 14090 ppm.

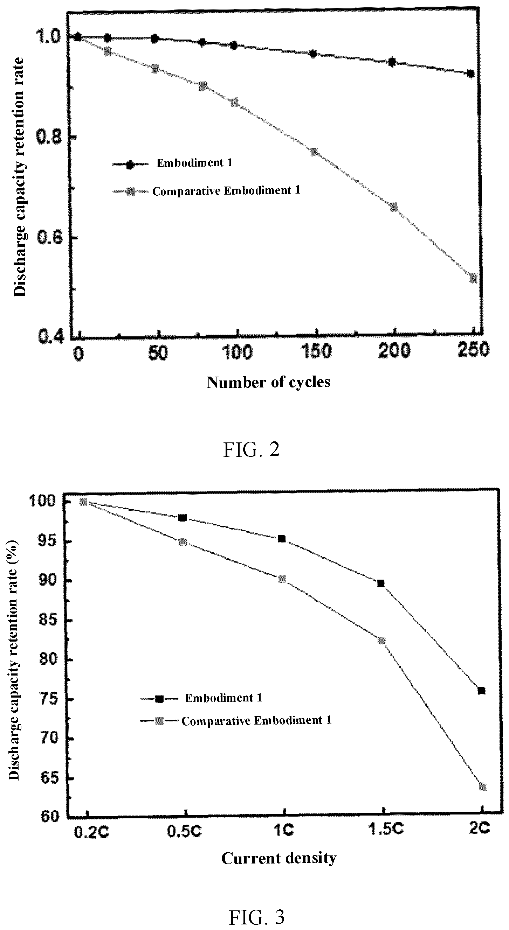

FIG. 2 and FIG. 3 show the cycle performance and the rate performance of a lithium-ion battery, respectively, at a high voltage according to Embodiment 1 and Comparative Embodiment 1. Referring to FIG. 2 and FIG. 3, it is evident that both the cycle performance and rate performance of the lithium-ion battery in Embodiment 1 are better than those of the lithium-ion battery in Comparative Embodiment 1, primarily because a reasonable distribution of vacancies inside the positive active material in Embodiment 1 enhances the structural stability of the material at a high voltage.

In some embodiments, in terms of shape, the first peak is generally a short and broad peak, and the second peak is generally a tall and thin peak. In some embodiments, the peak width at half height of the first peak of the positive active material is HA, and the peak width at half height of the second peak is HB. The peak widths at half height of the first peak and the second peak satisfy $0.017 \leq HB/HA \leq 90.2$ or satisfy $0.02 \leq HB/HA \leq 50$.

The peak area is in positive correlation with the content of the element in the positive active material. Because the vacancies correlate with the cobalt element of the first peak, the peak area of the first peak is proportional to the number of vacancies. By further controlling the vacancy percentage inside the positive active material to fall within an appropriate range, the performance of the material can be further optimized. In some embodiments, a peak area of the first peak is SA, and a peak area of the second peak is SB. The peak areas of the first peak and the second peak satisfy $0 < SA/SB \leq 0.3$. If SA = 0, no vacancies exist in the positive active material, and therefore, the structural stability of the material cannot be improved. If SA/SB > 0.3, excessive vacancies exist in the positive active material and result in a decrease in the structural stability of the material.

In some embodiments, the positive active material according to this application includes a compound represented by Formula I:

$$Li_aCo^I_{b1}Co^{II}_{b2}M_cO_dE_e \qquad \text{(Formula I)}.$$

In the formula above, $0.95 \leq a \leq 1.05$, $0 < b1 < b2 < 1$, $b1 + b2 \leq 1$, $0 \leq c \leq 0.2$, $0 < d \leq 2$, $0 \leq e \leq 0.1$; M includes or is one or more elements selected from the group consisting of Al, Mg, Ca, Zn, Ti, Zr, Nb, Mo, La, Y, Ce, Ni, Mn, W and Ho; and E includes or is one or more elements selected from the group consisting of F, S, B, N and P. In some embodiments, in the $^{59}Co$ NMR spectrum of the compound represented by Formula I above, the first peak is a $Co^I$ peak and the second peak is a $Co^{II}$ peak.

## II. Electrochemical Device

Another embodiment of this application further provides an electrochemical device, including: a positive electrode, a negative electrode, and an electrolytic solution. The positive electrode includes a positive current collector and a positive active material layer disposed on the positive current collector. The positive active material layer includes the positive active material according to this application. The negative electrode includes a negative current collector and a negative active material layer disposed on the negative current collector. The negative active material layer includes a negative active material.

In some embodiments, the positive current collector may be a positive current collector commonly used in the art, and may include, but is not limited to, an aluminum foil or a nickel foil.

In some embodiments, the positive active material layer according to this application further includes a binder and a conductive agent in addition to the positive active material according to this application.

The binder improves bonding between particles of the positive active material, and also improves bonding between the positive active material and the positive current collector. In some embodiments, the binder includes or is one or more selected from polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, nylon, or the like.

The conductive agent may be used to enhance conductivity of the electrode. This application may use any conductive material as the conductive agent, as long as the conductive material does not cause unwanted chemical changes. In some embodiments, the conductive material includes or is one or more selected from: a carbon-based material (for example, natural graphite, artificial graphite, carbon black, acetylene black, Ketjen black, and carbon fiber), a metal-based material (for example, metal powder, metal fiber, including copper, nickel, aluminum, silver, and the like), a conductive polymer (for example, a polyphenylene derivative), or any mixture thereof, or the like.

The negative active material can reversibly intercalate and deintercalate lithium ions. In some embodiments, the negative active material includes one or more of or is one or more selected from the following materials: a carbonaceous material, a siliceous material, an alloy material, a composite oxide material containing lithium metal, and the like. In some embodiments, examples of the carbonaceous material include but without limitation: crystalline carbon, non-crystalline carbon, and a mixture thereof. In some embodiments, the crystalline carbon may be amorphous or flake-shaped, mini-flake-shaped, spherical or fibrous natural graphite or artificial graphite. In some embodiments, the non-crystalline carbon may be soft carbon, hard carbon, mesophase pitch carbide, calcined coke, and the like.

The specific type of the negative active material is not limited, and may be selected as required. In some embodiments, examples of the negative active material may include, but without being limited to, at least one of natural graphite, artificial graphite, mesocarbon microbead (MCMB for short), hard carbon, soft carbon, silicon, a silicon-carbon composite, a Li-Sn alloy, a Li-Sn-O alloy, Sn, SnO, $SnO_2$, spinel-structured lithiated $TiO_2$-$Li_4Ti_5O_{12}$, or a Li-Al alloy.

In some embodiments, the negative current collector may be a negative current collector commonly used in the art, and includes but is not limited to: a copper foil, a nickel foil, a stainless steel foil, a titanium foil, foamed nickel, foamed copper, a polymer substrate coated with a conductive metal, and any combination thereof.

In some embodiments, the negative active material layer according to this application further includes a binder and a conductive agent in addition to the negative active material. The binder and conductive agent in the negative electrode may be made from the same materials as described above, details of which are omitted here.

When an electrochemical device is charged and discharged at a high voltage over time, the discharge capacity of the electrochemical device fades gradually, and the particles contained in the positive active material may be cracked due to violent expansion and shrinkage of the volume. However, the positive active material according to this application can maintain high structural stability during high-voltage charge-and-discharge cycles. In some embodiments, the positive active material includes particles with a diameter not less than 5 $\mu$m. In an embodiment in which the positive electrode of the electrochemical device contains a positive active material with the foregoing particle diameter, based on the mass of the positive active material according to this application, when the discharge capacity of the electrochemical device fades to 80% to 90% of the initial capacity, the crack rate of the particles with a diameter not less than 5 $\mu$m is not greater than 30%, not greater than 25%, not greater than 20%, not greater than 15%, or not greater than 10%.

When the electrochemical device undergoes charge-and-discharge cycles at a high voltage, side reactions occur between the electrode active material and the electrolytic solution to generate by-products. The by-products accumulate on the surface of the electrode active material particles, resulting in an increase in the resistance. However, the positive active material according to this application is of high interfacial stability, thereby greatly reducing the occurrence of side reactions during high-voltage charge-and-discharge cycles, and reducing the growth rate of the direct current resistance (DCR) of the electrochemical device. In some embodiments, when the discharge capacity of the electrochemical device fades to 80% of the initial discharge capacity, the growth rate of the direct current resistance of the electrochemical device per cycle is less than 2%, less than 1.5%, less than 1%, or less than 0.5%.

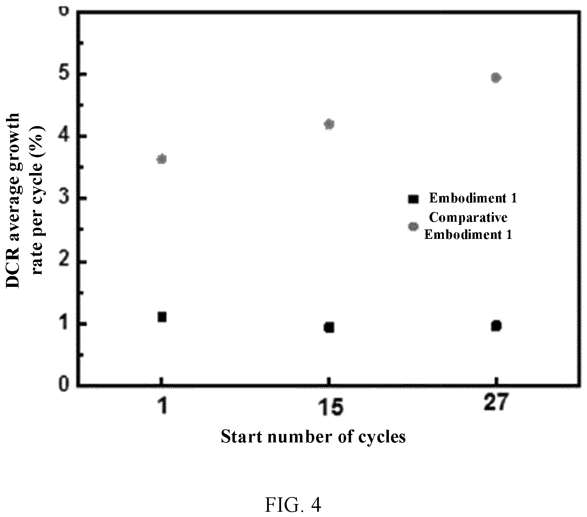

FIG. 4 is a scatterplot of a DCR average growth rate per cycle of a lithium-ion battery prepared in Embodiment 1 versus Comparative Embodiment 1. In this application, every 10 charge-and-discharge cycles of the lithium-ion battery are considered as a unit. One DCR value at the start of the 10 cycles is measured, another DCR value at the end of the 10 cycles is measured, and then a difference between the two DCR values is calculated. The difference is divided by 10 to obtain the DCR average growth rate per cycle of the lithium-ion battery.

Specifically, referring to FIG. 4, the x-axis shows a start number of cycles from which a DCR measurement is started. For example, for the lithium-ion batteries in Embodiment 1 and Comparative Embodiment 1, this application measures three units that start from the 1st, 15th, and 27th cycle respectively, where each unit includes 10 charge-and-discharge cycles. In each of the three 10-cycle units, one DCR value at the start of the 10 cycles is measured, another DCR value at the end of the 10 cycles is measured, and a difference between the two DCR values is calculated and divided by 10 to obtain a DCR average growth rate. As can be seen from the scattered points in FIG. 4, the average growth rate of the DCR of the lithium-ion battery prepared in Embodiment 1 is significantly lower than that of the lithium-ion battery prepared in Comparative Embodiment 1.

As mentioned above, in the charge-and-discharge cycles of the electrochemical device, side reactions occur between the positive active material and the electrolytic solution to generate by-products. The by-products accumulate on the surface of the positive active material particles. When the charge and discharge go on, the thickness of the by-product layer increases gradually. The positive active material according to this application is of high interfacial stability, and therefore, can suppress the occurrence of side reactions. Therefore, in some embodiments, when the discharge capacity of the electrochemical device fades to 80% to 90% of the initial discharge capacity, the thickness of the by-product layer is $\eta$ $\mu$m, where $\eta \leq 0.5$, $\eta \leq 0.4$, $\eta \leq 0.3$, or $\eta \leq 0.2$.

In some embodiments, the by-product layer includes carbon, oxygen, fluorine, and nitrogen. Fluorine is beneficial but nitrogen is adverse to the interfacial stability of the positive active material to some extent. In some embodiments, based on the total weight of carbon, oxygen, fluorine, and nitrogen, an average weight percentage of fluorine in the by-product layer is $\omega F$, and an average weight percentage of nitrogen is $\omega N$. The weight percentage of fluorine and nitrogen in the by-product layer satisfies $\omega F - \omega N \geq 5\%$. In some embodiments, when the discharge capacity of the electrochemical device fades to 80% to 90% of the initial discharge capacity, based on the total weight of carbon, oxygen, fluorine, and nitrogen, the average weight percentage of fluorine and the average weight percentage of nitrogen in the by-product layer satisfy $\omega F - \omega N \geq 5\%$.

During charge-and-discharge cycles of the electrochemical device, cobalt in the positive active material dissolves into the electrolytic solution in the form of ions, moves to the negative electrode after passing through the separator, and is electrodeposited into the negative active material layer during charging. The positive active material according to this application contains reasonably distributed vacancies and the cobalt ions located near the vacancies are not prone to dissolve out. Therefore, few cobalt ions are dissolved out during the high-voltage charge-and-discharge cycles of the electrochemical device, and the cobalt ions electrodeposited into the negative active material layer are even fewer. In some embodiments, based on the total weight of the negative active material layer, the increment of the concentration of cobalt on the negative electrode at the end of each cycle is Q, where $Q \leq 10$ ppm, $Q \leq 7$ ppm, $Q \leq 5$ ppm, $Q \leq 3$ ppm, or $Q \leq 2$ ppm. In some embodiments, when the discharge capacity of the electrochemical device fades to 80% to 90% of the initial capacity, the increment Q of the concentration of cobalt on the negative electrode at the end of each cycle satisfies $Q \leq 10$ ppm, $Q \leq 7$ ppm, $Q \leq 5$ ppm, $Q \leq 3$ ppm, or $Q \leq 2$ ppm.

On the basis of modification of the positive active material, if the electrolytic solution system is further improved, the side reactions between the positive active material and the electrolytic solution can be further suppressed, and therefore, the electrochemical performance of the electrochemical device at a high voltage can be more exerted.

The electrolytic solution may include an organic solvent, a lithium salt, and an additive. The organic solvent of the electrolytic solution according to this application may be any organic solvent known in the prior art suitable for use as a solvent of the electrolytic solution. In some embodiments, the organic solvent of the electrolytic solution according to this application includes at least one of or is at least one selected from: ethylene carbonate (EC), propylene carbonate (PC), diethyl carbonate (DEC), ethyl methyl carbonate (EMC), dimethyl carbonate (DMC), methyl propionate, ethyl propionate, or propyl propionate.

In some embodiments, the lithium salt in the electrolytic solution according to this application includes at least one of or is at least one selected from: lithium hexafluorophosphate $(LiPF_6)$, lithium bistrifluoromethanesulfonimide $LiN(CF_3SO_2)_2$ (LiTFSI for short), lithium bis(fluorosulfonyl)imide $Li(N(SO_2F)_2)$ (LiFSI for short), lithium bis(oxalate) borate $LiB(C_2O_4)_2$ (LiBOB for short), lithium tetrafluorophosphate oxalate $(LiPF_4C_2O_2)$, lithium difluoro(oxalate) borate $LiBF_2(C_2O_4)$ (LiDFOB for short), lithium hexafluorocesium oxide $(LiCsF_6)$, or lithium difluorophosphate $(LiPO_2F_2)$.

As an improvement for the electrolytic solution system, in some embodiments, the electrolytic solution according to this application further includes a nitrile-containing additive. During charge-and-discharge cycles of the electrochemical device, the nitrile-containing additive undergoes chemical reactions or physical adsorption on the surface of the positive active material, and forms a specific high-performance nitrile protection film structure on the surface to stabilize the interfacial structure of the positive electrode, thereby protecting the positive active material and promoting the structural stability of the positive active material during high-voltage charge-and-discharge cycles.

In some embodiments, the nitrile-containing additive includes at least one of or is at least one selected from the group consisting of adiponitrile, succinonitrile, glutaronitrile, malononitrile, 2-methyl glutaronitrile, pimelic nitrile, sebaconitrile, azelanitrile, 1,4-dicyano-2-butene, ethylene glycol bis(propionitrile) ether, 3,3'-oxydipropionitrile, thiomalononitrile, hex-2-enedinitrile, butenedionitrile, 2-pentenedionitrile, ethylsuccinonitrile, hex-3-enedionitrile, 2-methyleneglutaronitrile, 4-cyanopimelonitrile, 1,3,5-hexane tricarbonitrile, 1,2,3-propanetricarbonitrile, 1,2,3-tris(2-cyanooxy)propane, 1,3,5-pentane tricarbonitrile, 1,3,6-hexane tricarbonitrile and triacetonitrile ammonia. In some embodiments, the nitrile-containing additive includes at least one of or is at least one selected from the group consisting of: adiponitrile, succinonitrile, 1,3,5-pentane tricarbonitrile, 1,3,6-hexane tricarbonitrile, 1,2,6-hexane tricarbonitrile and triacetonitrile ammonia.

The 1,3,6-hexane tricarbonitrile is an additive that is moderate in molecule length and rich in active groups, and is very effective when used in conjunction with the lithium cobalt oxide, where the lithium cobalt oxide serves as a positive active material according to the present application and possesses a $^{59}$Co NMR doublet. A possible reason for that is: the cobalt in the positive active material according to this application is in a slightly asymmetric chemical environment. The 1,3,6-hexane tricarbonitrile is also a slightly asymmetric material, and in the electrochemical system, can interact with the positive active material more effectively. During an initial charge-and-discharge cycle, such a material forms a firm and stable solid electrolyte interphase (SEI) film on the surface of the positive active material to strengthen protection for the positive active material, thereby optimizing the cycle stability and rate performance of the electrochemical device.

The protective effect of the nitrile-containing additive correlates with the dosage of the additive to some extent. In some embodiments, based on the total weight of the electrolytic solution, the content of the nitrile-containing additive is 0.01 wt% to 20 wt%, 0.01 wt% to 10 wt%, 0.1 wt% to 20 wt%, 0.1 wt% to 10 wt%, 1 wt% to 20 wt%, or 1 wt% to 10 wt%.

In some embodiments, the electrochemical device according to this application further includes a separator disposed between the positive electrode and the negative electrode to prevent short circuit. The material and the shape of the separator used in the electrochemical device in this application are not particularly limited, and may be any material and shape disclosed in the prior art. In some embodiments, the separator includes a polymer or an inorganic material or the like formed from a material that is stable to the electrolytic solution according to this application.

In some embodiments, the separator may include a substrate layer and a surface treatment layer. The substrate layer is a non-woven fabric, film, or composite film, which, in each case, have a porous structure. The material of the substrate layer includes at least one of or is at least one selected from polyethylene, polypropylene, polyethylene terephthalate, or polyimide. Specifically, the material of the substrate layer may be a polyethylene porous film, a polypropylene porous film, a polyethylene non-woven fabric, a polypropylene non-woven fabric, or a polypropylene-polyethylene-polypropylene porous composite film.

The surface treatment layer may be, but is not limited to, a polymer layer, an inorganic material layer, or a hybrid layer of a polymer and an inorganic material.

The inorganic material layer may include inorganic particles and a binder. The inorganic particles may include or be selected from a combination of one or more of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder may include or be selected from a combination of one or more of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, poly methyl methacrylate, polytetrafluoroethylene, and polyhexafluoropropylene.

The polymer layer may include a polymer. The material of the polymer includes at least one of or is at least one selected from polyamide, polyacrylonitrile, an acrylate polymer, polyacrylic acid, polyacrylate, polyvinylpyrrolidone, polyvinyl ether, polyvinylidene fluoride, or poly(vinylidene fluoride-co-hexafluoropropylene).

A person skilled in the art understands that the electrochemical device according to this application may be a lithium-ion battery or any other appropriate electrochemical device. To the extent of not departing from the disclosure hereof, the electrochemical device according to this application includes any device in which an electrochemical reaction occurs. Specific examples of the electrochemical device include all kinds of primary batteries, secondary batteries, solar batteries, or capacitors. Especially, the electrochemical device is a lithium secondary battery, including a lithium metal secondary battery, a lithium-ion secondary battery, a lithium polymer secondary battery, or a lithium-ion polymer secondary battery.

## III. Method for Preparing Positive Active Material

To obtain a positive active material with a $^{59}$Co NMR doublet according to this application, this application further provides a method for preparing the positive active material.

Using $Li_aCo^I_{b1}Co^{II}_{b2}M_cO_dE_e$ as an example of the positive active material, in which M includes or is one or more elements selected from the group consisting of Al, Mg, Ca, Zn, Ti, Zr, Nb, Mo, La, Y, Ce, Ni, Mn, W and Ho, and E includes or is one or more elements selected from the group consisting of F, S, B, N and P. One of the preparation methods is: in a process of doping with the element M and the element E, adding different additives to adjust the reaction conditions to implement doping with the elements M and E. The additives can promote the diffusion and distribution of the doping elements M and H, enable the elements to reasonably occupy lattice positions, and create a reasonable distribution of vacancies, thereby exerting an effect on the chemical environment of cobalt.

Specifically, the method may include the following steps:

(1) Mixing a lithium source, a cobalt source, an M source, and an additive Aa at a given ratio to obtain a mixture first;
(2) Stirring the mixture in step (1) until homogeneous;
(3) Performing high-temperature treatment on the homogeneous powder in step (2), and grinding and sifting the powder;
(4) Cooling the high-temperature treated powder in step (3), and mixing the cooled powder with the E source and the additive Ab at a given ratio;
(5) Stirring the mixture in step (4) until homogeneous; and
(6) Performing high-temperature treatment on the homogeneous powder in step (5), and grinding and sifting the powder to obtain a lithium cobalt oxide that serves as a positive active material with a $^{59}$Co NMR doublet.

In the mixture in step (1) above, the molar ratio between lithium and cobalt of the lithium source and the cobalt source is 0.97 to 1.08; the molar ratio between M and cobalt of the M source and the cobalt source is 0.0001 to 0.2; and the molar ratio between the additive Aa and the M source is not higher than 0.05. The additive Aa includes, but is not limited to, one or more of sodium carbonate, sodium oxalate, ammonium fluoride, sodium fluoride, and the like.

In steps (2) and (5), the standard of homogeneous powder is that the powder is not obviously agglomerated or separated. For example, in steps (2) and (5), the mixture may be put into a mixing tank and stirred for 3 to 6 hours until the mixture is uniformly mixed.

In step (3), the temperature range of the high-temperature treatment is 800 °C to 1100 °C, and the duration of the high-temperature treatment is 6 to 24 hours.

In step (4), the molar ratio between H and Co of the H source and the cobalt source is 0.0001 to 0.1; and the molar ratio between the additive Ab and the E source is not higher than 0.02. The additive Ab includes, but is not limited to, one or more of ammonium sulfate, polyethylene glycol, or lithium oxalate.

In step (6), the temperature range of the high-temperature treatment is 300 °C to 1000 °C, and the duration of the high-temperature treatment is 4 to 24 hours.

In steps (3) and (6), the atmosphere for the high-temperature treatment is air or an inert gas. The inert gas may be, but without being limited to, at least one of helium, argon, or nitrogen. The sieve standard is 100 mesh to 500 mesh.

Using $Li_aCo^I_{b1}Co^{II}_{b2}M_cO_dE_e$ as an example of the positive active material, another method is to control the synthesis process of a reactive precursor to obtain two different lithium cobalt oxide precursors, one of which is burned-in and then mixed with the other precursor to react. The degree of reaction varies between components. Therefore, the sintered product contains vacancies with the concentration to some extent. In this way, two different chemical environments are created for cobalt in the positive active material. Specifically, the method may include the following steps:

(1) First, mixing a lithium source and a cobalt source at a molar ratio of 0.97 to 1.08 between lithium and cobalt to obtain a mixture A; and mixing another lithium source and another cobalt source at a molar ratio of 0.95 to 1.05 between lithium and cobalt to obtain a mixture B;

(2) Stirring the mixture A and the mixture B in different mixers separately until homogeneous;

(3) Performing high-temperature treatment on the homogeneous mixture A in step (2), and grinding and sifting the powder;

(4) Cooling the high-temperature treated powder in step (3), and mixing the cooled powder with the mixture B in step (2) at a weight ratio of 2: 1 to 10: 1;

(5) Stirring the mixture in step (4) until homogeneous; and

(6) Performing high-temperature treatment on the homogeneous powder in step (5), and grinding and sifting the powder to obtain a lithium cobalt oxide that serves as a positive active material with a $^{59}Co$ NMR doublet.

In the foregoing steps, the standard of homogeneous powder is that the powder is not obviously agglomerated or separated. For example, the mixture may be put into a mixing tank and stirred for 3 to 6 hours until the mixture is uniformly mixed.

In step (3), the temperature range of the high-temperature treatment is 200 °C to 500 °C, and the duration of the high-temperature treatment is 1 to 6 hours. In step (6), the temperature range of the high-temperature treatment is 500 °C to 1100 °C, and the duration of the high-temperature treatment is 6 to 24 hours.

In steps (3) and (6), the atmosphere for the high-temperature treatment is air or an inert gas. The inert gas may be, but without being limited to, at least one of helium, argon, or nitrogen. The sieve standard is 100 mesh to 500 mesh.

The types of the lithium source, cobalt source, M source, and E source are not particularly limited in this application, and may be any substance that can effectively provide the elements lithium, cobalt, M, and E, and may be flexibly selected by a person skilled in the art according to actual needs. In some embodiments of this application, the lithium source may be, but without being limited to, one or more of lithium hydroxide, lithium carbonate, lithium acetate, lithium oxalate, lithium oxide, lithium chloride, lithium sulfate, or lithium nitrate. In some embodiments of this application, the cobalt source may be, but without being limited to, one or more of cobalt hydroxide, cobalt carbonate, cobalt acetate, cobalt oxalate, cobalt oxide, cobalt chloride, cobalt sulfate, or cobalt nitrate. In some embodiments of this application, the M source may be, but is not limited to, one or more of nitrate, hydroxide, oxide, peroxide, sulfate, or carbonate of the element M. The E source may be, but without being limited to, one or more of hydride, oxide, acid, or salt of the element E.

### IV. Application

The electrochemical device according to this application may be used for any purposes not particularly limited, and may be used for any purposes known in the prior art. According to some embodiments of this application, the electrochemical device according to this application may be used to make an electronic device. The electronic device includes, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

The following uses a lithium-ion battery as an example to further describe the technical solution of this application with reference to comparative embodiments and embodiments, but this application is not limited to such embodiments. A person skilled in the art understands that the preparation method described herein is merely exemplary. Any modifications and equivalent replacements made to the technical solutions of this application without departing from the scope of the technical solutions of this application still fall within the protection scope of this application.

### V. Embodiments

Preparing a lithium-ion full battery

According to the following method, a lithium-ion full battery is prepared by using the positive active material disclosed in the embodiments and comparative embodiments.

(1) Preparing a positive electrode: Mixing the positive active material prepared according to the following embodiments and comparative embodiments, conductive carbon black, and a binder polyvinylidene difluoride (PVDF) at a weight ratio of 96: 2: 2 in an N-methyl-pyrrolidone solvent, stirring well to make a positive slurry; coating a front side and a back side of a positive current collector aluminum foil with the obtained positive slurry evenly, and drying at 85 °C to obtain a positive active material layer; and then performing cold calendering, slitting, and cutting, and welding a positive tab to obtain a positive electrode.

(2) Preparing a negative electrode: Mixing artificial graphite as a negative active material, styrene butadiene rubber (SBR) as a binder, and sodium carboxymethyl cellulose (CMC) as a thickener at a weight ratio of 97.5: 1.5: 1 in deionized water, and stirring well to make a negative slurry; coating a front side and a back side of a negative current collector copper foil with the negative slurry evenly, and drying at 85 °C to form a negative active material layer; and then performing cold calendering, slitting, and cutting, and welding a negative tab to obtain a negative electrode.

(3) Preparing an electrolytic solution: Mixing ethylene carbonate (EC for short), diethyl carbonate (DEC for short), and propylene carbonate (PC for short) at a weight ratio of 2: 6: 2 in an argon atmosphere glovebox in which the water content is less than 10 ppm, stirring evenly to make a solvent, and then dissolving fully dried lithium salt $LiPF_6$ in the solvent to make a solution in which the content of $LiPF_6$ is 1 mol/L; and adding 1.5 wt% 1,3 propane sultone and 3 wt% fluoroethylene carbonate. The content of each ingredient is a percentage of the ingredient in the total mass of the electrolytic solution.

(4) Preparing a separator: The separator is made of a ceramic-coated polyethylene (PE) material.

(5) Assembling a lithium-ion battery: Stacking the positive electrode, the separator, and the negative electrode in sequence, and placing the separator between the positive electrode and the negative electrode to serve a function of separation. Winding the electrode plates, putting the electrode plates into a packaging shell, injecting the electrolytic solution, sealing the shell, and finally performing chemical formation to make a lithium-ion battery.

Preparing a lithium-ion half battery (button battery)

Preparing a half battery by using almost the same method as the full-battery preparation method described above, except the following differences:

(1) Preparing a positive electrode: Selecting randomly a region coated with an active material layer on the front side and the back side of the current collector in the positive electrode of the full battery. Washing with dimethyl carbonate (DMC) to remove one side of coating and obtain a single-side-coated positive electrode plate.

(2) Preparing a negative electrode: Using a metal lithium film as a negative electrode, where one side of the metal lithium film is attached to the current collector copper foil. In a drying room, cutting the metal lithium film, and welding a negative tab to obtain a negative electrode plate.

(3) Preparing an electrolytic solution: Mixing ethylene carbonate (EC for short), diethyl carbonate (DEC for short), and propylene carbonate (PC for short) at a weight ratio of 2: 6: 2 in an argon atmosphere glovebox in which the water content is less than 10 ppm, stirring evenly to make a solvent, and then dissolving the fully dried lithium salt $LiPF_6$ in the solvent to make a solution in which the content of $LiPF_6$ is 1 mol/L; and adding 1.5 wt% 1,3 propane sultone, 3 wt% fluoroethylene carbonate, 0.5% 1,3,6-hexane tricarbonitrile, and 2% adiponitrile. The content of each ingredient is a percentage of the ingredient in the total mass of the electrolytic solution.

Preparing a nuclear magnetic resonance specimen

Selecting randomly a double-side-coated region from the positive electrode of the full battery. Washing with DMC to remove one side of coating and obtain a single-side-coated positive electrode plate. Preparing a button battery from the single-side-coated positive electrode plate and a counter electrode made of a lithium sheet. Discharging the button battery at a constant current density of 10 mA/g until the voltage reaches the cut-off voltage 3.0 V Leaving the battery to stand for 5 minutes, and then discharging the button battery at a constant current density of 10 mA/g until the voltage reaches the cut-off voltage 3.0 V, so that the button battery is fully discharged. Scraping the positive active material off from the positive electrode plate, ready for a nuclear magnetic resonance test.

Nuclear magnetic resonance test of the positive active material

Performing a nuclear magnetic resonance test on the positive active material by using a BRUKER AVANCE III wide-cavity solid-state nuclear magnetic resonance spectrometer with a frequency of 400 MHz, so as to obtain a $^{59}$Co nuclear magnetic resonance spectrum. Spinning a rotor with a diameter of 1.3 mm at a magic angle, where the spinning speed is 35 kHz, and the spectrum acquisition time is 6 minutes to 5 hours. Finally, normalizing all pattern results. Reading the values of the peak width at half height and the peak area from the resultant nuclear magnetic resonance pattern by using Origin software.

Testing the cycle charge-and-discharge performance

Taking 5 lithium-ion batteries prepared from the positive active material in each embodiment and each comparative embodiment separately, charging and discharging the lithium-ion batteries by performing the following steps, and calculating a capacity retention rate of the lithium-ion batteries.

Performing a first charge-and-discharge cycle in an 25 °C environment first. Charging the lithium-ion batteries at a constant current of 0.5 C (a current value at which the nominal capacity of the battery is fully discharged in 2 hours) and then at a constant voltage until the voltage reaches an upper limit of 4.53 V; and then discharging the lithium-ion batteries at a constant current of 0.5 C until the voltage reaches a cut-off voltage of 3.0 V, and recording a first-cycle discharge capacity $C_1$ (also referred to as an initial discharge capacity). Subsequently, performing 250 charge-and-discharge cycles, and recording a 250th-cycle discharge capacity $C_{250}$.

Calculating the cycle capacity retention rate of the lithium-ion batteries

according the following formula: cycle capacity retention rate $= (C_{250}/C_1) \times 100\%$.

Testing the rate performance

Taking the lithium-ion batteries prepared from the positive active material in each comparative embodiment and each embodiment separately, charging and discharging the lithium-ion batteries by performing the following steps, and calculating a discharge capacity retention rate of the lithium-ion batteries under 2 C with reference to a discharge capacity of a lithium-ion battery under 0.2 C.

Leaving a battery to stand for 5 minutes in a 25 °C environment first, and then discharging the battery at 0.2 C until the voltage reaches 3 V; leaving the battery to stand for 5 minutes, and then charging the battery at 0.2 C until the voltage reaches 4.5 V; leaving the battery to stand for 5 minutes, and then discharging the battery at 0.2 C until the voltage reaches 3.0 V, and recording the capacity $C_{0.2}$. Repeating the foregoing process that include the same charging steps except that the discharge rate changes to 2 C, and then recording the capacity $C_2$.

Calculating the discharge capacity retention rate of the lithium-ion battery at 2C according to the following formula: discharge capacity retention rate $= (C_2/C_{0.2}) \times 100\%$.

Testing the direct current resistance (DCR)

Charging a full battery at a current density of 10 mA/g until a fully charged state of 4.53 V Leaving the battery to stand for 10 minutes, and then discharging the battery at a current density of 10 mA/g until the voltage reaches 3.0 V, and recording the discharge capacity C. Leaving the battery to stand for 5 minutes, and charging the battery at a constant current of 0.7 C until the voltage reaches 4.53 V, and then charging the battery at a constant voltage until the current is lower than 0.05 C. Leaving the battery to stand for 10 minutes, and discharging the battery at a current of 0.1 C for 3 hours, and then discharging the battery at a current of 1 C for 1 second. Collecting and analyzing the data to obtain an initial DCR value, denoted as $D_0$.

Subsequently, performing 10 charge-and-discharge cycles of the full battery at a charge rate of 0.7 C and a discharge rate of 1.0 C within a voltage range of 3.0 V to 4.53 V, and then measuring the DCR again according to the foregoing test process, denoted as $D_{10}$. Calculating the DCR average growth rate per cycle according to the following formula: average growth rate $= (D_{10} - D_0)/10$.

Preparing specimens for a by-product layer thickness test, a by-product EDS test, a crack rate test, and a cobalt accumulation test

Discharging a full battery at a current density of 10 mA/g until the voltage reaches 3.0 V Leaving the battery to stand for 10 minutes, and then discharging the battery again at a current density of 10 mA/g until the voltage reaches 3.0 V Disassembling the battery in a drying room or glovebox to obtain a positive electrode plate and a negative electrode plate, and drying the plates. Cutting out 2 cm $\times$ 2 cm specimens from the electrode plates, and vacuum-sealing the specimens immediately.

Testing the by-product layer thickness

Selecting a position of the electrode plate randomly, processing the electrode plate at the selected position by using an ion beam cross section polisher (model: JEOL-IB-09010CP), cutting the electrode plate along a direction perpendicular to the current collector to obtain a section of the electrode plate. Taking an image of the section by photographing at a magnification of not less than 5.0 K with a scanning electron microscope.

Selecting a particle with a diameter of not less than 5 μm inside the electrode plate, and selecting a position on the same particle, at which the by-product layer thickness is the largest. Drawing parallel lines at a lowest point and a highest point of the by-product. The distance between the parallel lines is the by-product layer thickness of the particle. Selecting 10 different particles that meet the foregoing test conditions, measuring the by-product layer thicknesses of all the particles, and calculating an average value as the by-product layer thickness.

Testing the by-product EDS

Selecting a position of the electrode plate randomly, processing the electrode plate at the selected position by using an ion beam cross section polisher (model: JEOL-IB-09010CP) to obtain a section of the electrode plate. Taking an image of the section by photographing at a magnification of not less than 5.0 K with a scanning electron microscope.

Select a position of the by-product on the particle surface for X-ray energy spectrum analysis. Based on the total weight of carbon, oxygen, nitrogen, and fluorine, measuring the average weight percentage of fluorine and the average weight percentage of nitrogen, denoted as ωF and ωN respectively. ωF means a weight percentage of fluorine in the 4 elements, and ωN means weight percentage of nitrogen in the 4 elements. Selecting at least three by-product positions for analysis and measurement, and using an averaged result as the element content in the by-product.

Testing the crack rate

Selecting a position of the electrode plate randomly, processing the electrode plate at the selected position by using an ion beam cross section polisher (model: JEOL-IB-09010CP) to obtain a section of the electrode plate. Taking an image of the section by photographing at a magnification of not less than 1.0 K with a scanning electron microscope. Selecting 100 particles with a diameter of not less than 5 μm for statistics. A particle with a crack in a cross-section of the particle in an SEM image is regarded as a cracked particle. In the cross-section of the particle in the image, a streak that continues for a length of not less than 0.5 μm and a width of not less than 0.1 μm is regarded as a crack. Recording the total number of cracked particles N, and calculating the cracking rate according to the following formula: cracking rate = N/100.

Testing the cobalt accumulation

Making a negative electrode in a full battery into a button battery, and performing charge-and-discharge cycles of the button battery in a voltage window of 3.0 V to 4.53 V Performing 10 charge-and-discharge cycles at a current of 10 mA/g and a temperature of 25 °C. Obtaining the negative electrode plate prior to the cycles and the negative electrode plate subsequent to the cycles separately, and determining the cobalt content of the negative electrode plates by using inductively coupled plasma (ICP). Dividing a difference of the cobalt content between the two negative electrode plates by the number of cycles to obtain an average value. The average value is an increment Q by which the cobalt concentration increases in each cycle.

The following describes in detail the specific implementation of the positive active material provided in this application.

**Embodiments 1 to 9 and Comparative Embodiments 1 to 4**

**Embodiment 1**

Mixing lithium carbonate, tricobalt tetraoxide, aluminum nitrate, lanthanum oxide, and sodium fluoride at the following ratios: a molar ratio between lithium and cobalt is 1: 1.05, a molar ratio between aluminum and cobalt is 0.3%, a molar ratio between lanthanum and cobalt is 0.1%, and a molar ratio between sodium fluoride and aluminum nitrate is 1: 100. Stirring the mixture evenly, sintering the mixture at 1000 °C for 12 hours in the air, cooling the mixture, grinding the mixture into powder, and sifting the powder. Mixing the sifted powder with aluminum oxide at a weight ratio of 2000: 1, stirring the mixture well, and sintering the mixture at 600 °C for 6 hours in the air, cooling the mixture, grinding the mixture into powder, and sifting the powder, so as to further coat the surface of the positive active material with aluminum.

**Embodiment 2**

Mixing lithium carbonate, tricobalt tetraoxide, magnesium nitrate, zirconium oxide, and sodium fluoride at the following ratios: a molar ratio between lithium and cobalt is 1: 1.05, a molar ratio between magnesium and cobalt is 0.2%, a molar ratio between zirconium and cobalt is 0.1%, and a molar ratio between sodium fluoride to magnesium nitrate is 1: 200. Stirring the mixture evenly, sintering the mixture at 1000 °C for 12 hours in the air, cooling the mixture, grinding the mixture into powder, and sifting the powder. Mixing the sifted powder with aluminum oxide at a weight ratio of 2000: 1, stirring the mixture well, and sintering the mixture at 600 °C for 6 hours in the air, cooling the mixture, grinding the mixture into powder, and sifting the powder, so as to further coat the surface of the positive active material with aluminum.

**Embodiment 3**

Mixing lithium carbonate, tricobalt tetraoxide, aluminum nitrate, lanthanum oxide, and sodium oxalate at the following ratios: a molar ratio between lithium and cobalt is 1: 1.05, a molar ratio between aluminum and cobalt is 0.3%, a molar ratio between lanthanum and cobalt is 0.1%, and a molar ratio between sodium oxalate and aluminum nitrate is 1: 100. Stirring the mixture evenly, sintering the mixture at 1000 °C for 12 hours in the air, cooling the mixture, grinding the mixture into powder, and sifting the powder. Mixing the sifted powder with aluminum oxide at a weight ratio of 2000: 1, stirring the mixture well, and sintering the mixture at 600 °C for 6 hours in the air, cooling the mixture, grinding the mixture into powder, and sifting the powder, so as to further coat the surface of the positive active material with aluminum.

**Embodiment 4**

Mixing lithium carbonate, tricobalt tetraoxide, aluminum nitrate, and sodium oxalate at the following ratios: a molar ratio between lithium and cobalt is 1: 1.05, a molar ratio between aluminum and cobalt is 0.3%, and a molar ratio between sodium oxalate and aluminum nitrate is 1: 100. Stirring the mixture evenly, sintering the mixture at 1000 °C for 12 hours in the air, cooling the mixture, grinding the mixture into powder, and sifting the powder. Mixing the sifted powder with ammonium fluoride at a molar ratio of 0.1% between fluoride and cobalt, and adding lithium oxalate at a molar ratio of 1: 100 between lithium oxalate and ammonium fluoride. Stirring the mixture well, sintering the mixture at 600 °C for 6 hours in the air, cooling the mixture, grinding the mixture into powder, and sifting the powder.

**Embodiment 5**

Mixing well lithium carbonate and $Co_3O_4$ containing 1.2% Al at a ratio of 1: 1.05 between lithium and cobalt to obtain a mixture A. Mixing well lithium chloride and $Co_3O_4$ containing 0.06% La at a ratio of 1: 1.045 between lithium and cobalt to obtain a mixture B. Reacting the mixture A at 350 °C for 2 hours, cooling the mixture A, mixing well the mixture A with the mixture B at a weight ratio of 1: 5, and reacting at 1000 °C for 12 hours. Cooling the mixture, grinding the mixture into powder, and sifting the powder.

**Embodiment 6**

Mixing well lithium carbonate and $Co_3O_4$ containing 0.14% Ti at a ratio of 1: 1.05 between lithium and cobalt to obtain a mixture A. Mixing well lithium chloride and $Co_3O_4$ containing 0.011% Y at a ratio of 1: 1.045 between lithium and cobalt to obtain a mixture B. Reacting the mixture A at 350 °C for 2 hours, cooling the mixture A, and mixing well the mixture A with the mixture B at a weight ratio of 1: 6, and reacting at 1000 °C for 12 hours. Cooling the mixture, grinding the mixture into powder, and sifting the powder. Mixing well the resultant product with magnesium oxide at a weight ratio of 2000: 1, and reacting at 600 °C for 6 hours. Cooling the mixture, grinding the mixture into powder, and sifting the powder, so as to further coat the surface of the positive active material with magnesium.

**Embodiment 7**

Mixing lithium carbonate, tricobalt tetraoxide, titanium oxide, and ammonium fluoride at the following ratios: a molar ratio between lithium and cobalt is 1: 1.05, a molar ratio between titanium and cobalt is 0.05%, and a molar ratio between ammonium fluoride and titanium oxide is 1: 100. Stirring the mixture evenly, sintering the mixture at 1000 °C for 12 hours in the air, cooling the mixture, grinding the mixture into powder, and sifting the powder. Mixing the sifted powder with ammonium fluoride at a molar ratio of 0.195% between fluoride and cobalt, and adding lithium oxalate at a molar ratio of 1: 100 between lithium oxalate and ammonium fluoride. Stirring the mixture well, sintering the mixture at 600 °C for 6 hours in the air, cooling the mixture, grinding the mixture into powder, and sifting the powder.

**Embodiment 8**

Mixing well lithium carbonate and $Co_3O_4$ containing 0.1% Mg at a ratio of 1: 1.05 between lithium and cobalt to obtain a mixture A. Mixing well lithium chloride and $Co_3O_4$ containing 0.05% Nb at a ratio of 1: 1.045 between lithium and cobalt to obtain a mixture B. Reacting the mixture A at 350 °C for 2 hours, cooling the mixture A, and mixing well the mixture A with the mixture B at a weight ratio of 1: 4, and reacting at 1000 °C for 12 hours. Cooling the mixture, grinding the mixture into powder, and sifting the powder. Mixing well the sifted powder with titanium oxide at a weight ratio of 2000: 1, reacting at 600 °C for 6 hours, cooling the mixture, grinding the mixture into powder, and sifting the powder, so as to further coat the surface of the positive active material with titanium.

**Embodiment 9**

Mixing lithium carbonate, tricobalt tetraoxide, magnesium oxide, niobium oxide, and ammonium fluoride at the following ratios: a molar ratio between lithium and cobalt is 1: 1.05, a molar ratio between magnesium and cobalt is 0.2%, a molar ratio between niobium and cobalt is 0.04%, and a molar ratio between ammonium fluoride and magnesium oxide is 1: 100. Stirring the mixture evenly, sintering the mixture at 1000 °C for 12 hours in the air, cooling the mixture, grinding the mixture into powder, and sifting the powder. Mixing the sifted powder with ammonium fluoride at a molar ratio of 0.095% between fluoride and cobalt, and adding lithium oxalate at a molar ratio of 1: 100 between lithium oxalate and ammonium fluoride. Stirring the mixture well, sintering the mixture at 600 °C for 6 hours in the air, cooling the mixture, grinding the mixture into powder, and sifting the powder.

**Comparative Embodiment 1**

Mixing lithium carbonate, tricobalt tetraoxide, and aluminum nitrate at the following ratios: a ratio between lithium and cobalt is 1: 1.05, and a molar ratio between aluminum and cobalt is 0.3%. Stirring the mixture evenly, sintering the mixture at 1000 °C for 12 hours in the air, cooling the mixture, grinding the mixture into powder, and sifting the powder. Mixing the sifted powder with aluminum oxide at a weight ratio of 2000: 1, stirring the mixture well, and sintering the mixture at 600 °C for 6 hours in the air, cooling the mixture, grinding the mixture into powder, and sifting the powder, so as to further coat the surface of the positive active material with aluminum.

**Comparative Embodiment 2**

Mixing lithium carbonate and tricobalt tetraoxide at the following ratio: a ratio between lithium and cobalt is 1: 1.05. Sintering the mixture at 1000 °C for 12 hours in the air, cooling the mixture, grinding the mixture into powder, and sifting the powder.

**Comparative Embodiment 3**

Mixing lithium carbonate, tricobalt tetraoxide, and aluminum nitrate at the following ratios: a ratio between lithium and cobalt is 1: 1.05, and a molar ratio between aluminum and cobalt is 0.3%. Stirring the mixture evenly, sintering the mixture at 900 °C for 12 hours in the air, cooling the mixture, grinding the mixture into powder, and sifting the powder.

**Comparative Embodiment 4**

Mixing lithium carbonate, tricobalt tetraoxide, and lanthanum oxide at the following ratios: a ratio between lithium and cobalt is 1: 1.05, and a molar ratio between lanthanum and cobalt is 0.3%. Stirring the mixture evenly, sintering the mixture at 1000 °C for 12 hours in the air, cooling the mixture, grinding the mixture into powder, and sifting the powder.

Adding 2.5 wt % adiponitrile in the electrolytic solution of the lithium-ion batteries of Embodiments 1 to 9 and Comparative Embodiments 1 to 4. Referring to Table 1-1 below, in contrast to Comparative Embodiments 1 to 4, the element cobalt in the positive active material in Embodiments 1 to 9 exhibits two peaks in the range of 13900 ppm to 14300 ppm in the $^{59}$Co NMR pattern. The values of the peak width at half height and the peak area of the two peaks are shown in Table 1-1. As can be seen from electrochemical data in Table 1-1, the cycle capacity retention rates of all the lithium-ion batteries in Embodiments 1 to 9 under a voltage window of 3.0 V to 4.53 V are equal to or higher than 85%, being significantly higher than those of the lithium-ion batteries in Comparative Embodiments 1 to 4. In addition, the discharge capacity retention rates of the lithium-ion batteries in Embodiments 1 to 9 discharged at a high current of 2 C are all higher than those in Comparative Embodiments 1 to 4, indicating that the lithium-ion batteries in Embodiments 1 to 9 exhibit excellent rate performance in contrast to Comparative Embodiments 1 to 4.

Table 1-2 below shows the data measured when the discharge capacity of the lithium-ion batteries in Embodiments 1 to 9 fades to 80% of the initial discharge capacity. The concentration increment Q of cobalt in the negative active material layer in all the lithium-ion batteries in Embodiments 1 to 9 is significantly less than that in the lithium-ion batteries in Comparative Embodiments 1 to 4. In addition, the thickness of the by-product layer on the surface of the positive active material particles in all the lithium-ion batteries in Embodiments 1 to 9 is also smaller than that in the lithium-ion batteries in Comparative Embodiments 1 to 4, and the difference in the average weight percentage between fluorine and nitrogen in the by-product is greater than 6%. Moreover, the crack rate of the positive active material particles with a diameter of not less than 5 $\mu$m in Embodiments 1 to 9 is also much lower than the crack rate of the positive active material particles in Comparative Embodiments 1 to 4. Finally, in the lithium-ion batteries in Embodiments 1 to 9, the average growth rate of the direct current resistance (DCR) per cycle is almost less than 1.3%, being significantly lower than that in the lithium-ion batteries in Comparative Embodiments 1 to 4.

**Table 1-1**

| | Positive active material | Position of $Co^I$ peak (ppm) | Position of $Co^{II}$ peak (ppm) | Peak width at half height of $Co^I$ peak (ppm) | Peak width at half height of $Co^{II}$ peak (ppm) | Peak area of $Co^I$ peak | Peak area of $Co^{II}$ peak | Cycle capacity retention rate | 2 C capacity retention rate |
|---|---|---|---|---|---|---|---|---|---|
| Embodiment 1 | $LiCo^I_{0.086}Co^{II}_{0.91}Al_{0.003}La_{0.001}O_2$ | 1407 2 | 1409 4 | 24.2 | 39.6 | 5469 | 6281 9 | 91.82% | 75.45% |
| Embodiment 2 | $Li_{0.999}Co^I_{0.08}Co^{II}_{0.911}Mg_{0.002}Zr_{0.001}O_{1.99}$ | 1407 2 | 1409 2 | 36.5 | 42 | 4413 | 5178 7 | 89.91% | 74.44% |
| Embodiment 3 | $LiCo^I_{0.091}Co^{II}_{0.905}Al_{0.003}La_{0.001}O_2$ | 1407 2 | 1409 6 | 27.1 | 37.7 | 6822 | 7099 2 | 88.91% | 73.39% |
| Embodiment 4 | $Li_{0.999}Co^I_{0.08}Co^{II}_{0.914}Al_{0.003}O_{1.99}F_{0.001}$ | 1406 5 | 1409 4 | 45.4 | 41.9 | 4940 | 5907 9 | 85.45% | 73.50% |
| Embodiment 5 | $Li_{0.9595}Co^I_{0.091}Co^{II}_{0.9}Al_{0.002}La_{0.0005}O_{1.97}$ | 14070 | 14094 | 23.4 | 38.8 | 7121 | 73219 | 87.75% | 75.10% |
| Embodiment 6 | $Li_{0.9999}Co^I_{0.0797}Co^{II}_{0.92}Ti_{0.0002}Y_{0.0001}O_2$ | 1407 7 | 1409 5 | 39.1 | 38.8 | 4229 | 4780 1 | 89.04% | 74.49% |
| Embodiment 7 | $LiCo^I_{0.08}Co^{II}_{0.92}Ti_{0.0005}O_2F_{0.002}$ | 1407 3 | 1409 4 | 34.7 | 44.9 | 4509 | 5266 8 | 88.02% | 73.38% |
| Embodiment 8 | $Li_{0.997}Co^I_{0.029}Co^{II}_{0.97}Mg_{0.002}Nb_{0.0004}O_2$ | 1407 4 | 1409 6 | 41.5 | 40.9 | 1460 | 5898 3 | 87.91% | 73.41% |
| Embodiment 9 | $Li_{1.012}Co^I_{0.069}Co^{II}_{0.912}Mg_{0.002}Nb_{0.0004}O_{1.98}F_{0.001}$ | 1407 2 | 1409 6 | 38.8 | 42.2 | 2917 | 4779 2 | 88.14% | 74.15% |
| Comparative Embodiment 1 | $LiCo_{0.997}Al_{0.003}O_2$ | - | 1409 4 | | | | | 51.03% | 63.30% |
| Comparative Embodiment 2 | $LiCoO_2$ | - | 1409 2 | | | | | 29.15% | 43.79% |
| Comparative Embodiment 3 | $LiCo_{0.997}Al_{0.003}O_2$ | - | 1409 5 | | | | | 49.33% | 63.12% |

(continued)

| | Positive active material | Position of Co$^I$ peak (ppm) | Position of Co$^{II}$ peak (ppm) | Peak width at half height of Co$^I$ peak (ppm) | Peak width at half height of Co$^{II}$ peak (ppm) | Peak area of Co$^I$ peak | Peak area of Co$^{II}$ peak | Cycle capacity retention rate | 2 C capacity retention rate |
|---|---|---|---|---|---|---|---|---|---|
| Comparative Embodiment 4 | $LiCo_{0.997}La_{0.003}O_2$ | - | 14094 | | | | | 52.20% | 62.67% |

Note: The aluminum, magnesium, and titanium added through coating at a later stage are not reflected in the molecular formula of the positive active material shown in Table 1 because the amount of aluminum oxide, magnesium oxide, and titanium oxide added is low in comparison with the sifted powder.

**Table 1-2**

| | Concentration increment Q of cobalt on negative electrode (ppm) | By-product thickness η (μm) | ωF in by-product | ωN in by-product | ωF-ωN in by-product | Particle crack rate | DCR growth rate |
|---|---|---|---|---|---|---|---|
| Embodiment 1 | 1.7 | 0.23 | 9.8% | 3.8% | 6.0% | 7.41% | 0.94% |
| Embodiment 2 | 3.9 | 0.26 | 10.7% | 1.9% | 8.8% | 19.00% | 1.05% |
| Embodiment 3 | 7.1 | 0.33 | 8.7% | 2.3% | 6.4% | 18.18% | 1.21% |
| Embodiment 4 | 3.5 | 0.19 | 9.8% | 0.9% | 8.9% | 18.68% | 0.92% |
| Embodiment 5 | 2.2 | 0.27 | 11.2% | 3.1% | 8.1% | 15.63% | 1.31% |
| Embodiment 6 | 3.7 | 0.41 | 12.1% | 4.5% | 7.6% | 8.33% | 0.88% |
| Embodiment 7 | 5.1 | 0.39 | 13.9% | 3.0% | 10.9% | 8.24% | 1.04% |
| Embodiment 8 | 4.0 | 0.24 | 12.2% | 0.4% | 11.8% | 15.79% | 1.23% |
| Embodiment 9 | 5.9 | 0.30 | 11.0% | 1.2% | 9.8% | 9.33% | 1.09% |
| Comparative Embodiment 1 | 14.4 | 0.67 | 9.7% | 6.7% | 3.0% | 72.73% | 4.19% |
| Comparative Embodiment 2 | 24.4 | 1.33 | 10.4% | 9.9% | 0.5% | 83.10% | 7.22% |
| Comparative Embodiment 3 | 19.1 | 1.07 | 7.5% | 3.4% | 4.1% | 72.15% | 6.43% |
| Comparative Embodiment 4 | 13.9 | 0.69 | 8% | 4.9% | 3.1% | 69.32% | 4.08% |

**Embodiments 10 to 15**

Embodiments 10 to 15 correspond to Embodiment 1, but differ from Embodiment 1 in that the components of the electrolytic solution and content of the components of are further modified. Table 2 below shows specific components and content as well as the resultant electrochemical data.

**Table 2**

| | Nitrile-containing additive | Content of nitrile-containing additive | Cycle capacity retention rate | 2 C capacity retention rate |
|---|---|---|---|---|
| Embodiment 1 | Adiponitrile | 2.5% | 91.82% | 75.45% |
| Embodiment 10 | 1,3,6-hexane tricarbonitrile Succinonitrile | 1%; 1% | 92.45% | 76.04% |
| Embodiment 11 | 1,3,6-hexane tricarbonitrile Adiponitrile | 1%; 1.5% | 92.95% | 77.67% |
| Embodiment 12 | 1,3,6-hexane tricarbonitrile Adiponitrile | 0.5%; 2% | 93.22% | 76.55% |
| Embodiment 13 | 1,3,6-hexane tricarbonitrile Adiponitrile | 1.0%; 1% | 92.47% | 76.78% |

(continued)

| | Nitrile-containing additive | Content of nitrile-containing additive | Cycle capacity retention rate | 2 C capacity retention rate |
|---|---|---|---|---|
| Embodiment 14 | 1,3,6-hexane tricarbonitrile Adiponitrile | 1.2%; 1.3% | 92.71% | 76.44% |
| Embodiment 15 | 1,3,6-hexane tricarbonitrile Nitrile-containing additive Adiponitrile | 0.8%; Content of nitrile-containing additive 1.7% | 92.91% Cycle capacity retention rate | 75.39% 2 C capacity retention rate |

Two nitrile-containing additives are added in the electrolytic solution in each of Embodiments 10 to 15. In contrast to Embodiment 1, the cycle performance and rate performance of the electrochemical devices in Embodiments 10 to 15 are further improved. In addition, on condition that the total content of the added nitrile-containing additives remains constant, the 1,3,6-hexane tricarbonitrile added can further effectively improve the cycle performance and rate performance of the electrochemical device under a high voltage window.

The foregoing embodiments sufficiently demonstrate that, with a reasonable distribution of vacancies introduced in the positive active material, the positive active material according to this application can maintain structural stability constantly under a high voltage window. Therefore, the electrochemical device that employs the positive active material according to this application can exhibit excellent cycle performance and rate performance at a high voltage. In addition, the electrochemical performance of the electrochemical device at a high voltage can be further optimized by improving the electrolytic solution system in conjunction with the positive active material according to this application.

References to "embodiments", "some embodiments", "an embodiment", "another example", "example", "specific example" or "some examples" throughout the specification mean that at least one embodiment or example in this application includes specific features, structures, materials, or characteristics described in the embodiment(s) or example(s). Therefore, descriptions throughout the specification, which make references by using expressions such as "in some embodiments", "in an embodiment", "in one embodiment", "in another example", "in an example", "in a specific example", or "example", do not necessarily refer to the same embodiment(s) or example(s) in this application. In addition, specific features, structures, materials, or characteristics herein may be combined in one or more embodiments or examples in any appropriate manner.

Although illustrative embodiments have been demonstrated and described above, a person skilled in the art understands that the above embodiments are not to be construed as a limitation on this application, and changes, replacements, and modifications may be made to the embodiments without departing from the spirit, principles, and scope of this application.

## Claims

1. A positive active material, wherein a first peak and a second peak exist in a $^{59}$Co NMR spectrum of the positive active material, a center position of the first peak is at A ppm, a center position of the second peak is at B ppm, and $13900 \leq A < B \leq 14300$.

2. The positive active material according to claim 1, wherein a peak width at half height of the first peak is HA, a peak width at half height of the second peak is HB, and $0.017 \leq HB/HA \leq 90.2$.

3. The positive active material according to claim 1, wherein a peak area of the first peak is SA, a peak area of the second peak is SB, and $0 < SA/SB \leq 0.3$.

4. The positive active material according to claim 1, comprising a compound represented by Formula I:

$$Li_aCo^I_{b1}Co^{II}_{b2}M_cO_dE_e \qquad \text{(Formula I)}$$

wherein $0.95 \leq a \leq 1.05$, $0 < b1 < b2 < 1$, $b1 + b2 \leq 1$, $0 \leq c \leq 0.2$, $0 < d \leq 2$, $0 \leq e \leq 0.1$; M is one or more elements selected from the group consisting of Al, Mg, Ca, Zn, Ti, Zr, Nb, Mo, La, Y, Ce, Ni, Mn, W and Ho; and E is one or more elements selected from the group consisting of F, S, B, N and P.

5. An electrochemical device, comprising a positive electrode, a negative electrode, and an electrolytic solution, wherein the positive electrode comprises a positive current collector and a positive active material layer, and the positive active material layer comprises the positive active material according to any one of claims 1 to 4.

6. The electrochemical device according to claim 5, wherein the positive active material comprises particles with a diameter not less than 5 $\mu$m, and, when a discharge capacity of the electrochemical device fades to 80% to 90% of an initial capacity, a crack rate of the particles with a diameter not less than 5 $\mu$m is not greater than 25%.

7. The electrochemical device according to claim 5, wherein, when a discharge capacity of the electrochemical device fades to 80% or higher of an initial discharge capacity, a growth rate of a direct current resistance of the electrochemical device per cycle is less than 1.5%.

8. The electrochemical device according to claim 5, wherein a surface of the particles of the positive active material comprises a by-product layer, and, when a discharge capacity of the electrochemical device fades to 80% to 90% of an initial discharge capacity, a thickness of the by-product layer is $\eta$ $\mu$m, and $\eta \le 0.5$.

9. The electrochemical device according to claim 8, wherein the by-product layer comprises carbon, oxygen, fluorine, and nitrogen; based on a total weight of carbon, oxygen, fluorine, and nitrogen, an average weight percentage of fluorine is $\omega$F, an average weight percentage of nitrogen is $\omega$N, and $\omega$F - $\omega$N $\ge 5\%$.

10. The electrochemical device according to claim 5,

   wherein the electrolytic solution comprises a nitrile-containing additive, and the nitrile-containing additive comprises at least one selected from the group consisting of: adiponitrile, succinonitrile, 1,3,5-pentane tricarbonitrile, 1,3,6-hexane tricarbonitrile, 1,2,6-hexane tricarbonitrile and triacetonitrile ammonia; and
   based on a total weight of the electrolytic solution, a content of the nitrile-containing additive is 0.1% to 10%.

11. An electronic device, comprising the electrochemical device according to any one of claims 5 to 10.

FIG. 1A

FIG. 1B

FIG. 2

FIG. 3

FIG. 4

| | INTERNATIONAL SEARCH REPORT | International application No. |
|---|---|---|
| | | **PCT/CN2020/079955** |

**A.  CLASSIFICATION OF SUBJECT MATTER**

H01M 4/131(2010.01)i

According to International Patent Classification (IPC) or to both national classification and IPC

**B.  FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 正极, 阴极, 钴, 核磁, 峰, 位置, 空穴, 空位, 分布, 扩散, cell, battery, positive, cathode, cobalt, Co, NMR, peak, position, locat+, site, place, void, cavity, lacuna, distribu+, diffus+

**C.  DOCUMENTS CONSIDERED TO BE RELEVANT**

| Category* | Citation of document, with indication, where appropriate, of the relevant passages | Relevant to claim No. |
|---|---|---|
| A | CN 1441508 A (SUMITOMO CHEMICAL COMPANY, LIMITED) 10 September 2003 (2003-09-10)<br>  description, page 2 line 26 - page 8 line 26 | 1-11 |
| A | CN 104919631 A (UMICORE KOREA LTD. et al.) 16 September 2015 (2015-09-16)<br>  entire document | 1-11 |
| A | CN 105449197 A (CITIC GUOAN MENGGULI POWER SCIENCE & TECHNOLOGY CO., LTD.) 30 March 2016 (2016-03-30)<br>  entire document | 1-11 |
| A | CN 106104869 A (SANYO ELECTRIC CO., LTD.) 09 November 2016 (2016-11-09)<br>  entire document | 1-11 |
| A | CN 106848224 A (INSTITUTE OF PHYSICS CHINESE, ACADEMY OF SCIENCES) 13 June 2017 (2017-06-13)<br>  entire document | 1-11 |
| A | US 2010264381 A1 (MASSACHUSETTS INSTITUTE OF TECHNOLOGY) 21 October 2010 (2010-10-21)<br>  entire document | 1-10 |

☑ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **06 December 2020** | **16 December 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/079955** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2016098553 A1 (HITACHI CHEMICAL COMPANY, LTD.) 23 June 2016 (2016-06-23) entire document | 1-11 |

Form PCT/ISA/210 (second sheet) (January 2015)

| International application No. |
|---|
| **PCT/CN2020/079955** |

| Patent document cited in search report | | | Publication date (day/month/year) | Patent family member(s) | | | Publication date (day/month/year) |
|---|---|---|---|---|---|---|---|
| CN | 1441508 | A | 10 September 2003 | EP | 1341246 | A3 | 07 January 2004 |
| | | | | EP | 1341246 | A2 | 03 September 2003 |
| | | | | JP | 2003257427 | A | 12 September 2003 |
| | | | | TW | 200304242 | A | 16 September 2003 |
| | | | | US | 2003162090 | A1 | 28 August 2003 |
| | | | | CN | 1290214 | C | 13 December 2006 |
| | | | | KR | 20030071542 | A | 03 September 2003 |
| | | | | US | 2010003602 | A1 | 07 January 2010 |
| CN | 104919631 | A | 16 September 2015 | US | 2015380722 | A1 | 31 December 2015 |
| | | | | WO | 2014091331 | A1 | 19 June 2014 |
| | | | | TW | 201434752 | A | 16 September 2014 |
| | | | | JP | 2016506596 | A | 03 March 2016 |
| | | | | KR | 101690898 | B1 | 28 December 2016 |
| | | | | JP | 6242401 | B2 | 06 December 2017 |
| | | | | US | 9859550 | B2 | 02 January 2018 |
| | | | | EP | 2932546 | A1 | 21 October 2015 |
| | | | | TW | I513660 | B | 21 December 2015 |
| | | | | CN | 104919631 | B | 02 August 2019 |
| | | | | EP | 2932546 | A4 | 21 December 2016 |
| | | | | KR | 20150090215 | A | 05 August 2015 |
| CN | 105449197 | A | 30 March 2016 | CN | 105449197 | B | 07 May 2019 |
| CN | 106104869 | A | 09 November 2016 | US | 2017018772 | A1 | 19 January 2017 |
| | | | | WO | 2015136892 | A1 | 17 September 2015 |
| | | | | CN | 106104869 | B | 22 January 2019 |
| | | | | JP | WO2015136892 | A1 | 06 April 2017 |
| | | | | JP | 6443441 | B2 | 26 December 2018 |
| CN | 106848224 | A | 13 June 2017 | CN | 106848224 | B | 10 May 2019 |
| US | 2010264381 | A1 | 21 October 2010 | WO | 2007041209 | A2 | 12 April 2007 |
| | | | | WO | 2007041209 | A3 | 03 January 2008 |
| | | | | US | 8529800 | B2 | 10 September 2013 |
| WO | 2016098553 | A1 | 23 June 2016 | KR | 20170083609 | A | 18 July 2017 |
| | | | | KR | 101983924 | B1 | 29 May 2019 |
| | | | | JP | WO2016098553 | A1 | 28 September 2017 |
| | | | | JP | 6418250 | B2 | 07 November 2018 |